# EUROPEAN PATENT APPLICATION

(11) **EP 4 531 170 A1**
(43) Date of publication of application: **02.04.2025**
(21) Application number: 23200580.1
(22) Date of filing: 28.09.2023
(51) Int. Cl.: H01M 10/625, H01M 10/653, H01M 10/658, H01M 50/55, H01M 50/119, H01M 50/202, H01M 50/209, H01M 50/229, H01M 50/296, H01M 50/367, H01M 50/383, H01M 50/30, H01M 50/342, H01M 50/103, H01M 50/107

(54) **BATTERY SYSTEM WITH IMPROVED THERMAL RESISTANCE**

(71) Applicant: Samsung SDI Co., Ltd., Yongin-si, Gyeonggi-do 17084 (KR)
(72) Inventor: Reinprecht, Wolfgang, 8144 Attendorf (AT); Reinprecht, Stefan, 8144 Attendorf (AT)
(74) Representative: Gulde & Partner

(57) **Abstract**

The present disclosure refers to a battery cell (10, 10'), including: a metal cell housing (12) with a top side (12a), a bottom side (12b) and side walls (12c), at the top side (12a) and/or at the bottom side (12b), a venting side (13) with a venting exit (14) to exit a venting gas stream from the battery cell (10, 10'), a cell sheathing (20) covering the outer surface of the cell housing (12) including the top side (12a), the bottom side (12b) and the side walls (12c), the cell sheathing (12) including a composite material with a fiber mat embedded in a matrix support material, wherein the cell sheathing (20) includes, at the venting side (13) of the battery cell (10, 10'), a venting opening (22) aligned with the venting exit (14) of the battery cell (10, 10') for letting the venting gas stream pass through the cell sheathing (20).

## Description

### Field of the Disclosure

The present disclosure relates to a battery system which, due to an improved thermal resistance, more securely handles a thermal runaway of one or more of its battery cells. Further, the present invention relates to a vehicle including such a battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine.

Generally, an electric-vehicle battery, EVB, or traction battery is a battery used to power the propulsion of battery electric vehicles, BEVs. Electric-vehicle batteries differ from starting, lighting, and ignition batteries in that they are designed to provide power for sustained periods of time. A rechargeable (or secondary) battery differs from a primary battery in that it is designed to be repeatedly charged and discharged, while the latter is designed to provide only an irreversible conversion of chemical to electrical energy. Low-capacity rechargeable batteries are used as power supplies for small electronic devices, such as cellular phones, notebook computers and camcorders, while high-capacity rechargeable batteries are used as power supplies for electric and hybrid vehicles and the like.

Generally, a rechargeable (or secondary) battery cell includes an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery cell via an electrochemical reaction of the positive electrode, the negative electrode, and the electrolyte solution. The shape of the case such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density such as for motor driving of a hybrid vehicle. For example, the battery module may be formed by interconnecting the electrode terminals of the plurality of unit battery cells in an arrangement or configuration depending on a desired amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected in series for providing a desired voltage. The battery modules may include submodules with a plurality of stacked battery cells and each stack includes cells connected in parallel that are, in turn, connected in series (*XpYs*) or cells connected in series that are, in turn, connected in parallel (XsYp).

A battery pack is a set of any number of (for example identical) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein and thus charging and discharging performance of the rechargeable battery deteriorates and the life-span of the rechargeable battery is shortened. Thus, cell cooling for effectively emitting/discharging/ dissipating heat from the cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. These exothermic reactions include combustion of flammable gas compositions within the battery pack housing. For example, when a cell is heated above a critical temperature (typically above 150°C) the battery cell can transition into a thermal runaway. The initial heating may be caused by a local failure, such as a battery cell internal short circuit, heating from a defect electrical contact, short circuit to a neighboring battery cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack.

Battery cells of a battery system may be insulated with plastic foils providing the required electrical insulation towards the side walls and bottom of a battery housing within normal operating temperatures of up to 150°C. The battery cells are squeezed or glued into the cell compartment of the battery housing towards the bottom and side walls, whereas the top side of the battery cells is usually uncovered. During a heat-up of a damaged battery cell, caused e.g. by a thermal runaway inside the battery cell, the plastic foils may melt with the consequence of loss of electrical insulation. This may result in a low electrical resistance between parts or components with high differential voltage (e.g. at least 20V) causing internal short circuits and/or arcing between these parts/components. For example, the housings of the battery cells which usually consist of aluminum may be electrically conductive at such voltages so that the internal short circuits and/or arcing may occur between neighboring battery cells due to the loss of the electrical insulation between the battery cells.

It is thus an object of the present invention to overcome or reduce at least some of the drawbacks of the prior art and to provide a battery cell which more securely handles a thermal runaway by preventing short circuits and/or arcing.

### Summary of Invention

The invention is defined by the appended claims. The description that follows is subjected to this limitation. Any disclosure lying outside the scope of the claims is only intended for illustrative as well as comparative purposes.

According to an aspect of the present disclosure, a battery cell is provided, including: a metal cell housing with a top side, a bottom side and side walls, at the top side and/or at the bottom side, a venting side with a venting exit to exit a venting gas stream from the battery cell during a thermal runaway, a cell sheathing covering the outer surface of the cell housing including the top side, the bottom side and the side walls, the cell sheathing including a composite material with a fiber mat embedded in a matrix support material, wherein the cell sheathing includes, at the venting side of the battery cell, a venting opening aligned with the venting exit of the battery cell for letting the venting gas stream pass through the cell sheathing.

According to an aspect of the present disclosure, electrode terminals are arranged at the top side of the battery cell, wherein the cell sheathing includes openings for the electrode terminals to extend through.

According to an aspect of the present disclosure, the fiber mat includes glass fibers, basalt fibers and/or mica fibers.

According to an aspect of the present disclosure, the matrix support material includes a resin and/or glue.

According to an aspect of the present disclosure, the matrix support material includes an epoxy and/or polyurethane binder.

According to an aspect of the present disclosure, the cell sheathing further includes a flame retardant.

According to an aspect of the present disclosure, the composite material is an FR-4 composite material.

According to an aspect of the present disclosure, the cell sheathing is adapted to the contour of the outer surface of the cell housing including the top side, a bottom side and side walls.

According to an aspect of the present disclosure, a battery system is provided including a battery housing accommodating a plurality of battery cells according to the disclosure, the battery cells being arranged to form one or more battery packs and/or battery modules.

According to an aspect of the present disclosure, an electric vehicle is provided including at least one battery cell according to the disclosure, or including the battery system according to the disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic sectional view of a battery cell according to a first embodiment.
Fig. 2 illustrates a schematic top view of the battery cell of Fig. 1.
Fig. 3 illustrates a schematic sectional view of a battery cell according to a second embodiment

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

### General Concept

According to an aspect of the present disclosure, a battery cell is provided. The battery cell may form one of a plurality of battery cells of a traction battery of an electric vehicle. The battery cell includes a cell housing inside of which an electrochemical cell is arranged. The cell housing is a metal cell housing, i.e. the cell housing consists of metal or mainly includes metal. For example, the metal cell housing may be an aluminum cell housing, i.e. the cell housing may consist of aluminum or be mainly included of aluminum. The metal cell housing is electrically conductive - at least at voltages that may occur during the regular operation of the battery cell as part of a traction battery of an electric vehicle, and/or at voltages that may occur during a thermal runaway occurring inside of the battery cell.

The cell housing includes a top side, a bottom side and side walls. The cell housing may be prismatic, e.g. in the form of a cuboid. In this case, the cell housing may include six sides, i.e. the top side, the bottom side and four side walls. Alternatively, the cell housing (and thus the battery cell) may be cylindrical including two circular areas parallel to each other and a lateral surface connecting the two circular surfaces, wherein the side walls form the lateral surface of the cylinder. In other words, in case of a cylindrical cell housing (and thus a cylindrical battery cell) the lateral surface of the cylinder may be considered to form the side wall, one of the circular areas to form the top side and the other of the circular areas to form the bottom side of the cell housing.

The battery cell includes at least one venting exit at a venting side of the battery cell, which may be the terminal side of the battery cells, i.e. the side that includes electrode terminals for electrically connecting the battery cell with further battery cells and/or with an electric motor of an electric vehicle. The venting exit is adapted to let a venting gas stream escape the battery cell during a thermal runaway of the battery cell. A venting valve may be arranged at the venting exit. The venting side may be the top side and/or the bottom side of the battery cell, i.e. a venting exit may be provided at the top side and/or the bottom side of the battery cell.

Further, the battery cell according to the invention includes a cell sheathing covering the outer surface of the cell housing. Covering means that the cell sheathing surrounds the cell housing, e.g. the whole cell housing, wherein the cell sheathing may be in direct contact with the outer surface of the cell housing. In other words, the cell sheathing sheathes or envelopes or encases the cell housing from the outside. In an embodiment, the cell sheathing completely covers the outer surface of the cell housing. In other words, the whole outer surface of the cell housing may be covered by the cell sheathing. Merely the venting exit of the battery cell, and e.g. the electrode terminals of the battery cell, is/are not covered by the cell sheathing. Thus, in an embodiment, the top side, the bottom and all of the side walls of the cell housing are covered by the cell sheathing. In case of a prismatic cell housing, the top side, the bottom side and all of the four side walls may be (completely) covered by the cell sheathing. In case of a cylindrical battery cell, both circular surfaces and the lateral surface may be (completely) covered by the cell sheathing.

The cell sheathing includes, or may consist of, a fiber mat embedded in a matrix support material, the combination of the fiber mat and the matrix support material thus forming a composite material. Within the fiber mat the fibers are not loosely arranged but are instead purposefully arranged. For example, the fiber mat is a woven fabric, i.e. the fibers are woven or interlaced to form a fabric/mat. The matrix support material provides stability to the fiber mat. The cell sheathing includes, at the venting side, a venting opening aligned with the venting exit of the battery cell for letting the venting gas stream pass through the cell sheathing. The venting opening may be a cut-out in the cell sheathing. The venting opening may correspond in its form and size to the form and size of the venting exit it is aligned with. Also, the venting opening may be a simple cut along a line. Such a cut may be sufficient to let the venting gas stream pass while the cell sheathing may still prevent contaminants from entering the battery cell through the venting exit from the outside. The cell sheathing may be fixed to the outer surface of the cell housing, for example via glue.

The cell sheathing according to the invention provides a thermally stable electrical insulation to the battery cell by covering the outer surface of the cell housing. The cell sheathing provides an electrical and a thermal insulation. As the cell sheathing surrounds the cell housing from all sides, the battery cell is (electrically) insulated to all sides. The battery cell may be insulated against any neighboring battery cells. As explained above, cell insulations as e.g. plastic foils melt during a thermal runway due to the high temperatures (1000° C and more) which results in loss of electrical insulation. This problem is overcome with the inventive cell sheathing because the cell sheathing may withstand these temperatures. The cell sheathing, due to the composite material, provides an improved insulation specifically during a thermal runaway of the battery cell itself or a neighboring battery cell because while at the high temperatures occurring during a thermal runaway the matrix support material may get destroyed, the fiber mat may still maintain its structure and its electrical insulation properties.

The composite material provides for the cell sheathing to be stable but still flexible which eases assembly. Nevertheless, albeit not being mechanically rigid, the cell sheathing provides sufficient electrical insulation and, may also provide sufficient thermal insulation such that thermal propagation of the thermal runaway to further battery cells is prevented. Thus, the cell sheathing according to the invention provides a heat resistant covering on an outside of the cell housing so that, in case of a thermal runaway, the cell housing and its electrical insulation stay intact.

The battery cell may degas through its venting exit in a controlled manner due to the venting opening provided in the cell sheathing. Thus, the cell sheathing, while covering the venting side (i.e. the top side or bottom side of the cell housing) nevertheless allows for the venting gas stream to exit the battery cell. The cell sheathing thus completely covers the outer surface of the battery cell, i.e. the top side, bottom side and any side walls, except for the venting exits, and possibly except for the electrode terminals as explained below. The cell sheathing may provide a thermal insulation of the battery cell e.g. by shielding the battery cell from any venting products which may deposit onto the cell sheathing from the outside. The battery cell according to the invention is thus capable of maintaining its electrical insulation during a thermal runaway and thus more securely handles the thermal runaway. The cell sheathing may provide a "one-piece" insulation with a tight fit to the cell housing.

According to an embodiment, the battery cell includes electrode terminals, the electrode terminals being arranged at the top side of the battery cell, wherein the cell sheathing includes openings for the electrode terminals to extend through. The electrode terminals may also be named cell terminals. The electrode terminals are the electrical poles of the battery cell for accessing the electrical power stored within the electrochemical cell and for electrical connection of the battery cell with one or more other battery cells of a battery module/system. Neighboring battery cells may be interconnected with one another via electrical connecting means contacting the electrode terminals of the respective battery cells. The electrode terminals extend through the cell sheathing such that the cell sheathing does not cover the electrode terminals. Thus, the cell sheathing may completely cover the outer surface of the battery cell, i.e. the top side, bottom side and any side walls, except for the venting exits and except for the electrode terminals. In other words, from the whole outer surface of the cell housing and thus of the battery cell merely the electrode terminals and the venting exit are exposed, i.e. are not covered by the cell sheathing. As explained, the cell sheathing covering the complete outer surface of the cell housing provides an improved insulation specifically during a thermal runaway. The cell sheathing not covering the electrode terminals allows for an easy electrical connection of the electrode terminals with e.g. any further battery cells. The electrode terminals may, however, be covered by a cover element after the battery cell has been placed into a battery housing of a battery system along with further battery cells, i.e. after assembly of the battery system. The openings for the electrode terminals may be formed as cut-outs in the cell sheathing as this is simple to manufacture.

According to an embodiment, the fiber mat includes one or more of the following: glass fibers, basalt fibers, mica fibers. These fibers may form a woven fabric as mentioned above. Mica means mica silicate minerals. The matrix support material may be or include a resin and/or a glue. The matrix support material may be or include an epoxy and/or polyurethane binder. These fibers and matrix support materials are suited for providing a flexible and thermally stable cell sheathing that can be easily arranged so as to cover the (whole) outer surface of the cell housing as explained above while providing sufficient electrical insulation even during a thermal runaway.

According to an embodiment, the cell sheathing further includes a flame retardant. The flame retardant is activated by the high temperatures occurring during a thermal runaway and prevents or at least slows further heat propagation. The flame retardant further improves the capabilities of the cell sheathing to withstand the high temperatures occurring during a thermal runaway so that the cell sheathing is suited to provide for a reliable electrical insulation of the battery cell.

According to an embodiment, the composite material of the cell sheathing is or includes an FR-4 composite material. FR-4 is a composite material composed of woven fiberglass fabric with an epoxy resin binder that is flame resistant (e.g. self-extinguishing) according to the National Electrical Manufacturers Association (NEMA) grade designation for glass-reinforced epoxy laminate material. Such an FR-4 composite material is suited to withstand the high temperatures occurring during a thermal runaway and thus is suited to provide for a reliable electrical insulation of the battery cell.

According to an embodiment, the cell sheathing is adapted to the contour of the outer surface of the cell housing including the top side, a bottom side and side walls. Being adapted to the contour means that the cell sheathing includes a shape corresponding to the shape of the elements it covers. The contour or form of the cell sheathing may be adapted to the contour of outer surface of the cell housing, i.e. the top side, bottom side, and all the side walls of the cell housing. The cell sheathing is suited for such an adaptation because it is relatively flexible due to the fiber mat but may still keep its form due to the matrix support material. Such an adaptation of the cell sheathing to the covered parts provides an improved electrical and thermal insulation. Also, this leaves less or no access for the venting products to reach the covered parts and thus allows for a reliable shielding.

The invention also pertains to a battery system including one or more of the battery cells according to the invention. The battery system may include a battery housing and a plurality of the battery cells according to the invention accommodated inside the housing. The battery housing thus forming a battery housing. The battery housing may also be considered as a cell compartment for the battery cells. The battery cells may be interconnected via electrical connecting means, e.g. busbars, contacting respective electrode/cell terminals of the battery cells to form one or more battery modules/battery packs. The battery cells may be arranged to form one or more battery packs, wherein in a battery pack the battery cells are electrically interconnected e.g. in a series and/or in parallel as explained above. Multiple of these battery packs may form a battery module. Two or more of the battery packs may be stacked to form cell stacks. The battery cells may e.g. be prismatic or cylindrical cells as mentioned above. Each of the battery cells may include a metal housing with a top side, a bottom side and with side walls from the top side to the bottom side. Each of the battery cells may include a venting exit at a venting side of the battery cell, the venting exits allowing a venting gas stream to escape the battery cells during a thermal runaway. Venting valves may be provided at the venting exits. The venting side may be the top side and/or the bottom side of the battery cells, i.e. venting exits may be provided at the top side and/or the bottom side of the battery cells. Each of the battery cells may include a cell sheathing according to the invention as described above.

The invention also pertains to an electric vehicle including a battery system according to the invention.

### Specific Embodiments

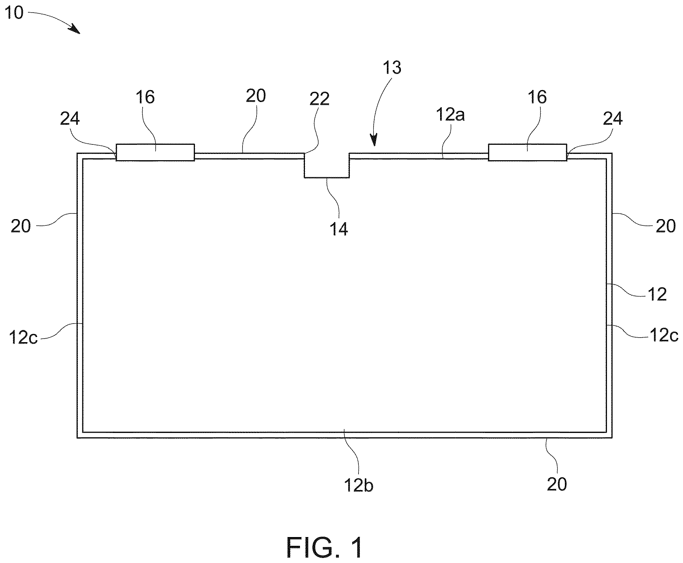

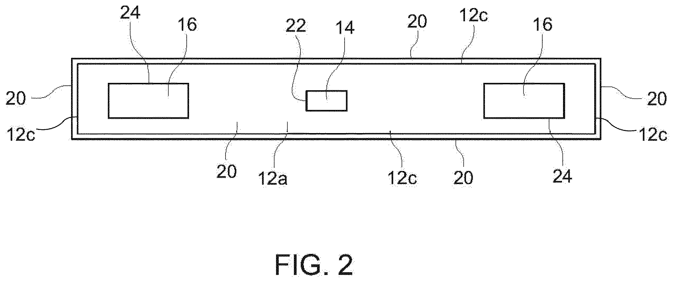

Fig. 1 and 2 schematically illustrate a battery cell 10 according to a first embodiment of the invention, wherein Fig. 1 shows the battery cell 10 in a sectional view and Fig. 2 shows the battery cell 10 from above.

The battery cell 10 includes an electrochemical cell encased by a cell housing 12, the cell housing 12 including aluminum. The cell housing 12 is thus a metal cell housing which is electrically conductive at least at a sufficiently high differential voltage, e.g. at least 20 V.

The cell housing 12 has a cuboid shape, the cell housing 12 including a top side 12a, a bottom side 12b and four side walls 12c. The top side 12a forms a venting side 13 of the battery cell 10 because the battery cell 10 includes a venting exit 14 at that side. During a thermal runaway occurring inside the battery cell 10, a venting gas stream may exit the battery cell 10 through the venting exit 14. A venting valve may be provided at the venting exit 14. Further, the battery cell 10 includes electrode terminals 16 at the top side 12a of the cell housing 12, the electrode terminals 16 forming electrical poles.

The battery cell 10 further includes a cell sheathing 20 surrounding the battery cell 10 from all sides thereby covering the outer surface of the cell housing 12 including the top side 12a, the bottom side 12b and all of the side walls 12c. The cell sheathing 20 directly abuts the outer surface of the cell housing 12 and thus the aluminum material. The cell sheathing 20 is thus adapted to the contour of the outer surface of the cell housing 12, i.e. of the top side 12a, a bottom side 12b and side walls 12c. The cell sheathing 20 may be glued directly and in close contact to the outer surface of the cell housing 12.

The cell sheathing 20 includes openings merely at the locations of the electrode terminals 16 and at the location of the venting exit 14. For example, the cell sheathing 20 includes a venting opening 22 at the top side 12a which is aligned with the venting exit 14. The venting opening 22 may be formed by a cut or cut-out. Therefore, the venting gas stream exhausted outwards from the venting exit 14 may pass through the cell sheathing 20 to the outside of the battery cell 10. Further, the cell sheathing 20 includes two openings 24, one for each of the two electrode terminals 16. The electrode terminals 16 extend through the openings 24 and thus through the cell sheathing 20. The openings 24 may be formed via cut-outs.

The cell sheathing 20 is made of an FR-4 composite material including glass and/or basalt fibers in the form of a fiber mat tightened by a composite glue such as epoxy or polyurethane. The cell sheathing 20 is thus flexible while providing improved thermal and electrical insulation properties compared to other cells insulations such as plastic foils.

During a thermal runaway, temperatures of 1000° C and more may be reached which the cell sheathing 20 may withstand due to the inventive cell sheathing 20. The cell sheathing 20 sufficiently protects the battery cell 10 from electrical faults, such as internal short circuits or arcing between neighboring cells, because the cell sheathing 20 keeps its electrical insulation properties even during the thermal runaway. With the cell sheathing 20 covering the complete cell housing from all its sides, the battery cell 10 is sufficiently insulated. The cell sheathing 20 provides a "one-piece" insulation with a tight fit to the cell housing 12. The battery cell 10 according to the invention is thus capable of maintaining its electrical insulation during a thermal runaway and thus more securely handles the thermal runaway.

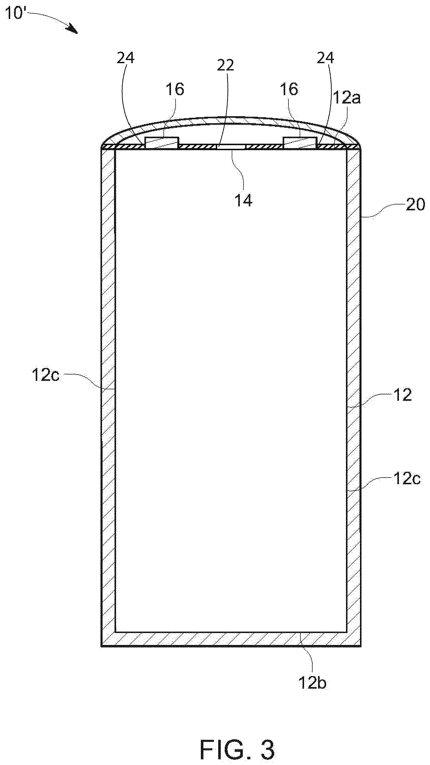

Fig. 3 illustrates a battery cell 10' according to a second embodiment of the invention. The battery cell 10' is not a cuboid battery cell but a cylindrical battery cell with a cell housing 12 having a cylindrical shape. In this embodiment, the cell housing 12 also has a top side 12a and a bottom side 12b which are formed by the circular surfaces of the cell housing 12, and a side wall 12c which are formed by the lateral surface of the cell housing 12. Here, a cell sheathing 20 consequently also has a cylindrical shape and covers the cell housing 12 completely from all sides except openings 24 through which electrode terminals 16 extend and a venting opening 22 in alignment with a venting exit 14. Thus, also such cylindrical battery cells may be outfitted with the cell sheathing 20 according to the invention providing a thermally stable electrical insulation.

### Reference signs

- 10: battery cell
- 10': battery cell
- 12: cell housing
- 12a: top side
- 12b: bottom side
- 12c: side walls
- 13: venting side
- 14: venting exit
- 16: electrode terminals
- 20: cell sheathing
- 22: venting opening
- 24: openings for electrode terminals

## Claims

1. A battery cell (10, 10'), comprising:
a metal cell housing (12) with a top side (12a), a bottom side (12b) and side walls (12c),
at the top side (12a) and/or at the bottom side (12b), a venting side (13) with a venting exit (14) to exit a venting gas stream from the battery cell (10, 10'),
a cell sheathing (20) covering the outer surface of the cell housing (12) comprising the top side (12a), the bottom side (12b) and the side walls (12c), the cell sheathing (12) comprising a composite material with a fiber mat embedded in a matrix support material,
wherein the cell sheathing (20) comprises, at the venting side (13) of the battery cell (10, 10'), a venting opening (22) aligned with the venting exit (14) of the battery cell (10, 10') for letting the venting gas stream pass through the cell sheathing (20).

2. The battery cell (10, 10') according to claim 1, wherein electrode terminals (16) are arranged at the top side (12a) of the battery cell (10, 10'), wherein the cell sheathing (20) comprises openings (24) for the electrode terminals (16) to extend through.

3. The battery cell (10, 10') according to claim 1 or 2, wherein the fiber mat comprises glass fibers, basalt fibers and/or mica fibers.

4. The battery cell (10, 10') according to any one of the preceding claims, wherein the matrix support material comprises a resin and/or glue.

5. The battery cell (10, 10') according to any one of the preceding claims, wherein the matrix support material comprises an epoxy and/or polyurethane binder.

6. The battery cell (10, 10') according to any one of the preceding claims, wherein the cell sheathing (20) further comprises a flame retardant.

7. The battery cell (10, 10') according to any one of the preceding claims, wherein the composite material is an FR-4 composite material.

8. The battery cell (10, 10') according to any one of the preceding claims, wherein the cell sheathing (20) is adapted to the contour of the outer surface of the cell housing (12) comprising the top side (12a), a bottom side (12b) and side walls (12c).

9. A battery system, comprising a battery housing accommodating a plurality of battery cells (10, 10') according to any one of claims 1 to 8, the battery cells (10, 10') being arranged to form one or more battery packs and/or battery modules.

10. An electric vehicle comprising at least one battery cell (10, 10') according to any one of claims 1 to 8, or comprising the battery system according to claim 9.

## Amended claims

### Amended claims in accordance with Rule 137(2) EPC.

1. A battery cell (10, 10'), comprising:
a metal cell housing (12) with a top side (12a), a bottom side (12b) and side walls (12c),
at the top side (12a) and/or at the bottom side (12b), a venting side (13) with a venting exit (14) to exit a venting gas stream from the battery cell (10, 10'),
a cell sheathing (20) covering an outer surface of the cell housing (12) comprising the top side (12a), the bottom side (12b) and the side walls (12c), the cell sheathing (20) comprising a composite material with a fiber mat embedded in a matrix support material,
wherein the cell sheathing (20) comprises, at the venting side (13) of the battery cell (10, 10'), a venting opening (22) aligned with the venting exit (14) of the battery cell (10, 10') for letting the venting gas stream pass through the cell sheathing (20).

2. The battery cell (10, 10') according to claim 1, wherein electrode terminals (16) are arranged at the top side (12a) of the battery cell (10, 10'), wherein the cell sheathing (20) comprises openings (24) for the electrode terminals (16) to extend through.

3. The battery cell (10, 10') according to claim 1 or 2, wherein the fiber mat comprises glass fibers, basalt fibers and/or mica fibers.

4. The battery cell (10, 10') according to any one of the preceding claims, wherein the matrix support material comprises a resin and/or glue.

5. The battery cell (10, 10') according to any one of the preceding claims, wherein the matrix support material comprises an epoxy and/or polyurethane binder.

6. The battery cell (10, 10') according to any one of the preceding claims, wherein the cell sheathing (20) further comprises a flame retardant.

7. The battery cell (10, 10') according to any one of the preceding claims, wherein the composite material is an FR-4 composite material.

8. The battery cell (10, 10') according to any one of the preceding claims, wherein the cell sheathing (20) includes a shape corresponding to the shape of elements it covers and directly abuts the outer surface of the cell housing (12).

9. A battery system, comprising a battery housing accommodating a plurality of battery cells (10, 10') according to any one of claims 1 to 8, the battery cells (10, 10') being arranged to form one or more battery packs and/or battery modules.

10. An electric vehicle comprising at least one battery cell (10, 10') according to any one of claims 1 to 8, or comprising the battery system according to claim 9.
